# EUROPEAN PATENT SPECIFICATION

(11) **EP 2 917 646 B1**
(45) Date of publication and mention of the grant of the patent: **05.08.2020**
(21) Application number: 13722664.3
(22) Date of filing: 18.03.2013
(51) Int. Cl.: F24D 19/00, F16K 5/00, F16K 11/076, F16K 11/085

(54) **A HEATING RADIATOR OF A HEATING SYSTEM, THE RADIATOR COMPRISING TWO HEATING PLATES AND A CONNECTING ELEMENT CONNECTING THE TWO HEATING PLATES**
HEIZKÖRPER EINES HEIZSYSTEMS, WOBEI DER HEIZKÖRPER ZWEI HEIZKÖRPERPLATTEN AUFWEIST UND EIN VERBINDUNGSELEMENT ZUR VERBINDUNG DER ZWEI HEIZKÖRPERPLATTEN
RADIATEUR DE CHAUFFAGE D`UN SYSTÈME DE CHAUFFAGE, LE RADIATEUR COMPRENANT UN ÉLÉMENT DE LIAISON ASSURANT LA LIAISON DE DEUX PLAQUES DE RADIATEUR

(30) Priority: 06.11.2012 CZ 201226948 U
(43) Date of publication of application: 16.09.2015
(73) Proprietor: Korado a. s., 560 02 Ceska Trebova (CZ)
(72) Inventor: HRDLICKA, Tomás, 560 02 Ceská Trebová (CZ); MENCLÍK, Milos, 560 02 Ceská Trebová (CZ)
(74) Representative: Spacek, Jindrich
(86) International application number: PCT/CZ2013/000043
(87) International publication number: WO 2014/071896

(56) References cited:
- EP-A1- 2 474 789
- BE-A1- 878 153
- DE-A1- 1 810 355
- DE-A1- 2 132 829
- DE-B- 1 218 828
- NL-A- 6 802 961
- US-A- 1 256 069

## Description

### Field of the Invention

This invention relates to a heating radiator of a heating system, the radiator comprising two heating plates and a connecting element providing connection of the two heating plates of the heating radiator of a heating system, wherein said connecting element consists of composite connecting and attaching cylindrical components and attaching bushings to form T-shaped casings with shut-off inserts or valves arranged in the interior of a multi-row radiator, in particular for the multi-row plate radiator when importance is given on a higher heating output of its front plate facing the heated room / space.

### Description of the Prior Art

Connecting elements providing connection of two heating radiator plates are themselves known. The document DE 101 35 215 C1 describes a heating plate radiator consisting of at least two heating plates. Here, the centre holes of the heating plates that are mutually offset are assigned in the longitudinal direction individually in angle or as T-shaped casings, connecting and attaching sleeves that are composed of spherical sections with connecting sockets. The flow distribution inside the attaching and connecting sockets makes sure that the heating medium seamlessly streams from the inlet into one of the heating plates and from other heating plate again to the outlet.

DE 299 80 186 U1 also describes a multi-row radiator with connecting elements. A shut-off insert with a closing element can be introduced into the connecting element. To enable the shut-off insert to carry out the function of a bleeding member, the end of the shut-off insert situated in the neck comprises a sealing plate with a through hole, which is closable by a sealing component carrying a spindle. On its front side, the shut-off element is provided with corresponding vent holes, through which the air can stream out through the sealing plate.

Document EP 2 474 789 A1 discloses a radiator with two heating plates comprising the features of the preamble of claim 1. One example of approach that consists in preferring higher heating output of the front heating plate facing a heated room at a multi-row heating plate radiator, is known from the published patent application (CZ PV 1998-2158), according to which the relevant double-row or multi-row heating plate radiator is preferably provided with a single inlet port, which is connected only with the front heating plate facing the heated room. The heating medium, which flows through this inlet port, is distributed along the upper edge of the front heating plate and by means of suitably dimensioned feeding channels situated perpendiculary to them and that are preferably equally spaced in the frontal area facing the heated room. Regardless of whether the radiator is operated at full or partial load, the heating medium is in that way primarily supplied to the front heating plate and subsequently to the remaining heating plates of the multi-row heating plate radiator. Consequently, the front radiator plate with the same heating output will be warmer, thus presenting more pleasant touch feeling than existing systems. Preferably, this advantageous effect is even intensified by the fact that the front heating plate features a higher radiation ratio.

To facilitate the flow of heating medium from the front heating plate to at least one subsequent heating plate or similar item that are positioned behind it, at least one connecting element or possibly a tube is arranged in the system, and said connecting element is preferably situated at the bottom front corner area of the radiator heating plate, from which then the partly cooled-down heating medium flows into the lower part of the second heating plate situated behind it or possibly into the subsequent plate in the case of the multi-row heating radiator. Regarding this second heating plate, the heating medium is supplied at first upwards to the upper longitudinal edge of the second or possibly the subsequent heating plate, where the liquid is again directed through the upper distribution channel provided and then is supplied by means of perpendicularly attached flow channels to its second lower corner area with a connected outlet port. However, it is supposed that the heating medium transfers the greater part of its heat to said front heating plate, while entering, already partially cooled, the second or subsequent heating plates, ensuring, in such a way, a reduced heating output.

The obvious drawback of this arrangement is that the control of the reduced heating output of the second or subsequent heating radiator plates of the multi-row heating unit can not be done. Another drawback of this solution consists in the fact that if compared with standard solutions of the multi-row heating radiators, where the hot heating medium streams equally in all heating plates to be cooled down, the heating output of the entire heating plate radiator is generally lower because the hot heating medium flows into the front heating plate at first while a second or subsequent heating plates are supplied with already cooled-down heating medium, thereby reducing the heating output of the second and possibly subsequent heating plates.

In terms of a controlled streaming of the heating medium into the multi-row heating radiator and with regard to the specific conditions in its partial load mode and in order to comply with achievable heating output and to increase comfort in the heated space and especially to improve the control possibility, a solution was proposed (PCT/EP2008/002963), which uses other valve in combination with one of the upper connecting elements that are connected to the inlet port of the heating medium, whereby it is possible to direct the mass flow of the heating medium to the second rear heating plate through an overflow connection, and the used connecting element is provided with an internal screen.

A disadvantage of the solution consists in using an overflow connection or overflow coupling, which significantly complicates and increases the production cost of multi-row heating radiators of such a design, and moreover, it causes problems with radiator cleaning for the end-user, and therefore the mentioned solution did not prove enough in practice.

### Nature of the Invention

The purpose of the invention is to improve the connecting elements used for multi-row radiators and to introduce a radiator with such a connecting element. The shut-off or control inserts integrated in the connecting elements should be manufacturable particularly easily and inexpensively while another objective is to improve the process of controlling the flow of the heating medium through the radiator, in particular in case of the multi-row plate radiator with inlet and outlet ports for the heating medium and usually at the first heating plate facing a heated room / space and which is conceived as a fully passing-through plate, and with at least one subsequent heating plate situated in a row behind it with intended medium flow reduction for cutting down or controlling the heating output, and said heating plates are mutually connected on the corners of their upper distributing channels by means of inflow fittings and / or by a connecting set with an inflow fitting for the inlet port of the heating medium and at lower collecting channels with an outflow fitting for the outlet port, whereby the specified task is achieved by the present invention, which substance is that the connecting element providing connection of two heating radiator plates consists of lateral connecting sockets and of the first threaded connection bushing, which is usually situated on the return branch of the heating system and that are arranged to form a T-shaped casing formed around a central spherical part of the connecting element, characterized in that the second threaded connection bushing for the valve shaft is attached across the plane of the intersections of the principal axes of the lateral connecting sockets and of the first threaded connection bushing and that said valve shaft extends sealed into the central spherical part of the connecting element with its with the radial recess provided cylindrical obturator, for which a cylindrical seat is formed with its lateral holes emptying into the lateral connecting sockets and into the threaded connection bushing, wherein the group of the valve shaft includes a coaxial sleeve to guide and to seal up a stem of the valve shaft, while the free end of the stem is provided with a driving shoulder, for a manual knob and/or an actuator of a servomotor.

The specified task is also further achieved by features of the claims 2 to 9 of the present invention. Further advantageous embodiments of the invention are always contained in the following respective claims.

### Description of the Drawings

Further advantages and effects of the invention are apparent from the attached drawings, wherein the individual figures depict:

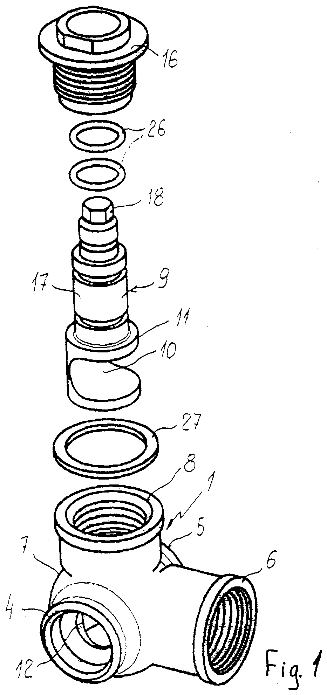

Fig. 1: oblique view of the connecting element in the exploded condition,

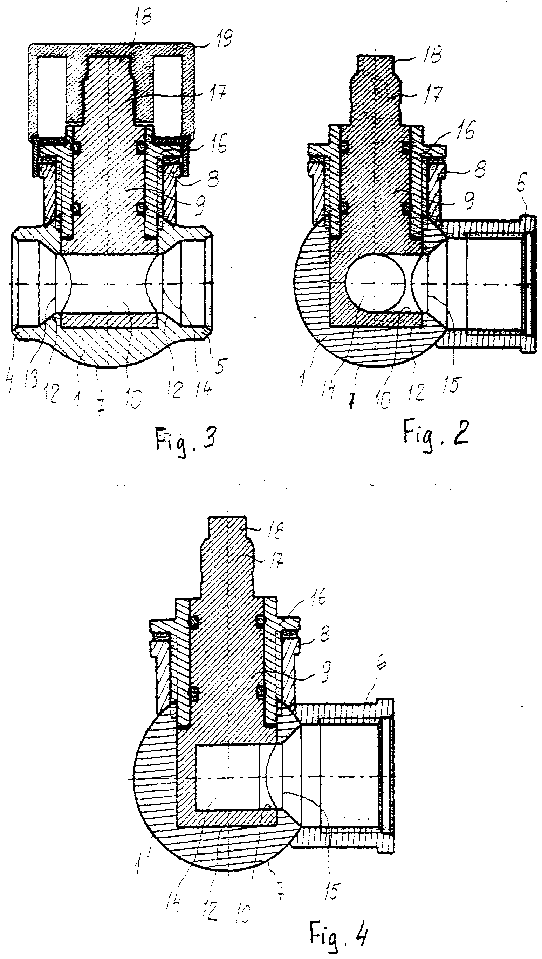

Fig. 2: cross-section of the connecting element with the second threaded connection bushing for the valve shaft,
Fig. 3: longitudinal section of the connecting element according to Fig. 2 with the suggested hand knob,
Fig. 4: cross-section of the connecting element with the attached second threaded connection bushing for the valve shaft, showing modified shape of the radial recess in the cylindrical obturator valve shaft and with corresponding lateral holes in the seat, whereby said holes empty into the lateral connection sockets and the threaded connection bushing,

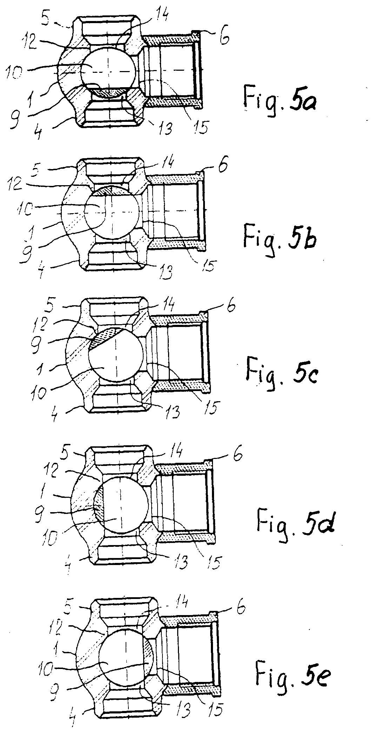

Fig. 5a - 5e: plan views of the connecting element showing various purposely adjustable positions of the radial recess in the cylindrical obturator of the valve shaft relatively to the lateral holes in the seat,

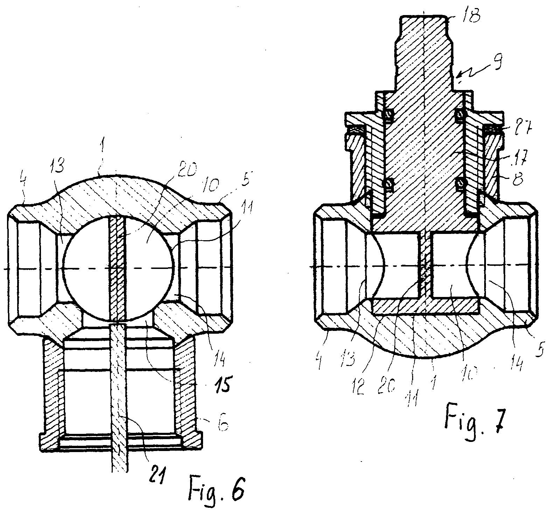

Fig. 6: plan section of the connecting element with the modified radial recess with the central screen in the cylindrical obturator of the valve shaft and showing its relationship to the separation crosspiece in the threaded connection bushing for the separation of the heating medium flows ensuring their possible regulation,
Fig. 7: longitudinal section of the connecting element according to Fig. 7,

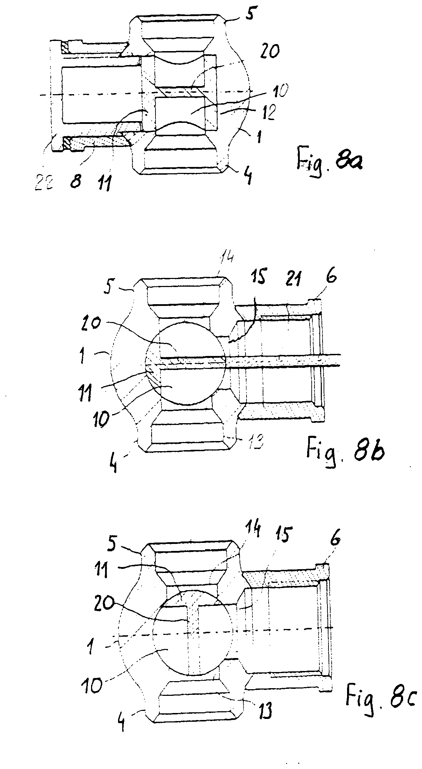

Fig. 8a - 8c: plan sections of the connecting element showing various positions of the central screen in the radial recess of the cylindrical obturator relatively to the seat holes, which are firmly adjustable through the threaded plug,

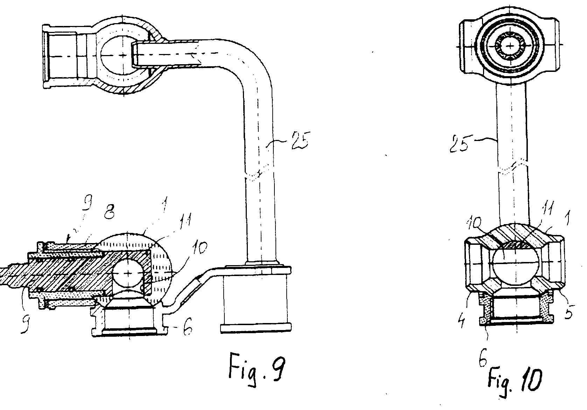

Fig. 9: schematic representation of the connecting element application in connection with the valve group for the bottom connection of the radiator in the heating system,
Fig. 10: vertical section of the connecting element and of the upper supply fitting of the valve group for the bottom connection of the radiator in the heating system,

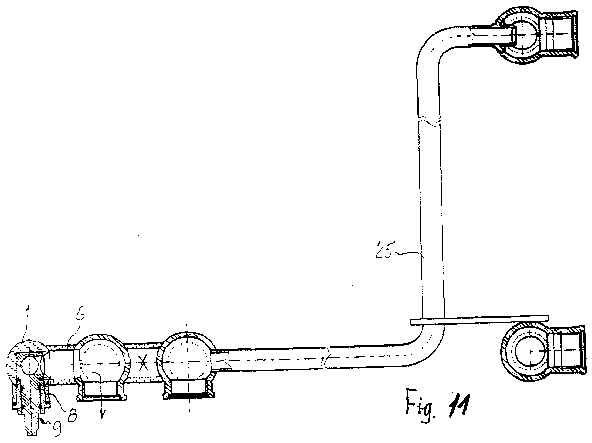

Fig. 11: schematic representation of the connecting element application in connection with the valve group for the for so-called bottom central connection of the radiator in the heating system,
Fig. 12: schematic representation of the multi-row radiator showing the connecting element application for adjustment and control of heating medium streaming from individual heating plates elsewhere in their respective corners, except the inflow connecting element with proposed thermostatic valve provided with the blind connecting elements with the possible use of some of the modifications of the corresponding connecting element,
Fig. 13: cross-section of the connecting element with the attached second threaded connection bushing for introduction of an cylindrical obturator in the form of a hollow cylinder to cut off all holes emptying into the connecting element seat.

### Examples of the Versions of the Invention

A connecting element 1 connecting two heating plates 2, 3 of a heating radiator 100 of a heating system consists of the lateral connecting sockets 4,5 and of the first threaded connection bushing 6, usually situated on the return branch of a not depicted heating system and which are arranged to form a T-shaped casing located around a central spherical part 7 of the connecting element 1.

The second threaded connection bushing 8 for the group of the valve shaft 9 is attached across the plane of the intersections of the principal axes of the lateral connecting sockets 4,5 and of the first threaded connection bushing 6 and said valve shaft 9 extends sealed into the central spherical part 7 of the connecting element 1 by means of the cylindrical obturator 11 provided with the radial recess 10 is attached, according to the invention, to the central spherical part 7 of the connecting element 1 and said central spherical part 7 is provided with cylindrical seat 12 formed with lateral holes 13,14,15 emptying into the lateral connection sockets 4,5 and into the attached threaded connection bushing 6.

The radial recess 10 in the cylindrical obturator 11 along with the lateral holes 13,14,15 may be variously profiled, for example with a square cross-section, and said recess depends only on the way of creating the seat 12 (here not described in more detail), i.e. whether it is made of suitable heat-resistant injection plastic, or manufactured by stuffing own material of the connecting element 1, etc.

In the suggested embodiment, the group of the valve shaft 9 includes a coaxial sleeve 16 to guide and to seal up the stem 17 of the valve shaft 9, while the free end of the stem 17 is provided with a driving shoulder 18, for example with the manual knob 19 and / or an actuator of a servomotor (not shown here), etc.

For specific purposes, for example, such as the use of the connecting element 1 as a closing element of the heating medium transfer between the radiator plates 2,3 of the radiator 100, or if it is designed as a divider intended for the separation of the heating medium flows between the heating plates 2,3 of the radiator 100, the radial recess 10 in the cylindrical obturator 11 is provided with the central screen 20.

A separation crosspiece 21 can be situated in the first threaded connection bushing 6 in front of the central screen 20 and said means 20,21 are adjusted only once when installing the radiator 100.

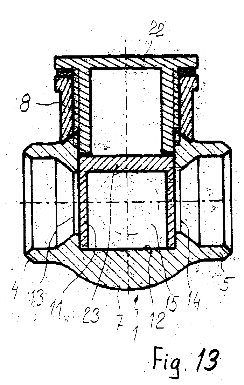

In these cases, the connecting element 1 is usually adjusted so that the group of the valve shaft 9 consists of the assembly of the cylindrical obturator 11 and the threaded sealing plug 22, arranged sealed in the second threaded bushing 8, and for example, the cylindrical obturator 11 arranged under the sealing plug 22 consists of hollow cylinder 23 in the seat 12 that is impermeable in all directions (Fig. 13).

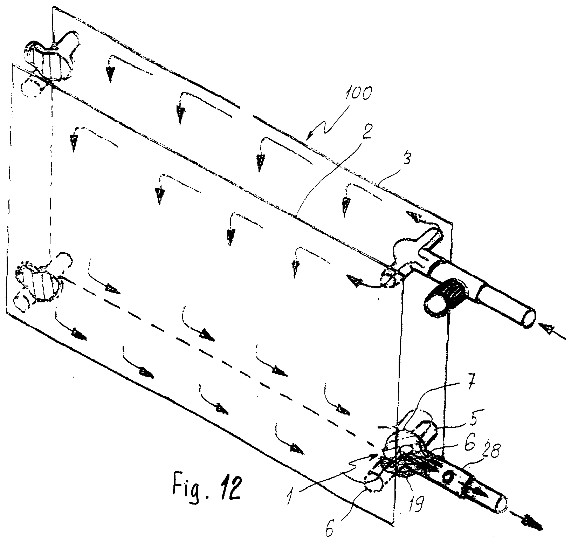

As shown in Fig. 12, the connecting element 1 is arranged on the contact area of both heating plates 2,3 of the radiator 100 at the outflow of the heating medium of said heating plates through the first threaded connection bushing 6, where a standard sealing fitting 28 can be connected in series with it.

It appears advantageous and flexible that the connecting element 1 on the contact area of both heating plates 2,3 of the radiator 100 at the outflow of the heating medium of said heating plates is arranged as a part of the cylindrical valve group 25 for the bottom connection of the radiator 100 in the heating system.

It appears also advantageous that the connecting element 1 on the contact area of both heating plates 2,3 of the radiator 100 at the outflow of the heating medium of said heating plates is arranged as a part of the cylindrical valve group 25 for the bottom central connection of the radiator 100 in the heating system.

Within its group, the connecting element 1 contains sealing components such as O-rings 26 and / or gaskets 27.

Detailed description of the functions of all the various arrangement variants of the connecting element 1, as well as its integration into various systems of connection of the radiator 100 to the heating system, the equipment with additional elements, etc., is not described in detail, because the topic is familiar for experts in the field.

## Claims

1. A heating radiator (100) of a heating system, the radiator comprising two heating plates (2, 3) and a connecting element (1) connecting the two heating plates (2, 3), said connecting element (1) consisting of lateral connecting sockets (4,5) and of a first threaded connection bushing (6), that are arranged to form a T-shaped casing formed around a central spherical part (7) of the connecting element (1), wherein a second threaded connection bushing (8) for the group of the valve shaft (9) is attached across the plane of the intersections of the principal axes of the lateral connecting sockets (4,5) and of the first threaded connection bushing (6) and that said valve shaft (9) extends sealed into the central spherical part (7) of the connecting element (1) by means of its cylindrical obturator (11) provided with the radial recess (10), for which a cylindrical seat (12) is formed with its lateral holes (13,14,15) emptying into the lateral connection sockets (4,5) and into the first threaded connection bushing (6), **characterized in that** the group of the valve shaft (9) includes a coaxial sleeve (16) to guide and to seal up a stem (17) of the valve shaft (9), while the free end of the stem (17) is provided with a driving shoulder (18), for a manual knob (19) and / or an actuator of a servomotor.

2. The radiator (100) according to claim 1, **characterized in that** the radial recess (10) in the cylindrical obturator (11) is provided with a central screen (20).

3. The radiator (100) according to claim 1 and 2, **characterized in that** a separation crosspiece (21) is arranged in the first threaded connection bushing (6) in front of the central screen (20).

4. The radiator (100) according to claims 1, 2 and 3, **characterized in that** the group of the valve shaft (9) consists of the group of the cylindrical obturator (11) and a sealing plug (22) that are arranged sealed in the second threaded connection bushing (8).

5. The radiator (100) according to claim 4, **characterized in that** the cylindrical obturator (11) arranged under the sealing plug (22) consists of hollow cylinder (23) in the seat (12) that said hollow cylinder is impermeable in all directions.

6. The radiator (100) according to claim 1, **characterized in that** the connecting element (1) is arranged on a contact area of both heating plates (2,3) of the heating radiator (100) at the outflow area of the heating medium and flows out of them through the first threaded connection bushing (6).

7. The radiator (100) according to claim 1, **characterized in that** the connecting element (1) is arranged on a contact area of both heating plates (2,3) of the heating radiator (100) at the outflow area of the heating medium out of them as a part of a cylindrical valve group (25) for the bottom connection of the radiator (100) in the heating system.

8. The radiator (100) according to claim 1, **characterized in that** the connecting element (1) is arranged on a contact area of both heating plates (2,3) of the heating radiator (100) at the outflow area of the heating medium out of them as a part of a cylindrical valve group (25) for the bottom central connection of the radiator (100) in the heating system.

9. The radiator (100) according to all precedent claims, **characterized in that** within its group of the valve shaft it contains sealing components such as O-rings (26) and / or gaskets (27).

## Patentansprüche

1. Heizkörper (100) eines Heizsystems, wobei der Heizkörper zwei Heizkörperplatten (2,3) aufweist und ein Verbindungselement (1) zur Verbindung der zwei Heizkörperplatten (2,3), wann das Verbindungselement (1) aus seitlichen Anschlussstutzen (4,5) und aus erster Anschlussbuchse mit Gewinde (6) besteht, zusammengesetzt um den zentralen kugelförmigen Teil (7) des Verbindungselements (1) in T-Form, wobei die zweite Anschlussbuchse mit Gewinde (8) für den Satz der Ventilspindel (9) quer zur Ebene von Schnittpunkten der Hauptachsen der Anschlussstutzen (4,5) und der ersten Anschlussbuchse mit Gewinde (6) angeschlossen ist und die angeführte Ventilspindel (9) greift abgedichtet in das Innere des zentralen kugelförmigen Teiles (7) des Verbindungselements (1) mittels einer radialen Aussparung (10) ein, versehen mit einem zylindrischen Kegel (11), für den in dem zentralen kugelförmigen Teil (7) ein Sattel (12) mit seitlichen Öffnungen (13,14,15) ausgebildet ist, die in die seitlichen Anschlussstutzen (4,5) und die Anschlussbuchse mit Gewinde (6) gerichtet sind, **gekennzeichnet dadurch, dass** der Satz der Ventilspindel (9) eine Koaxialbuchse (16) zum Führen und Abdichten des Schafts (17) der Ventilspindel (9) umfasst, wobei das freie Ende des Schafts (17) mit einem Antriebsansatz (18) für das manuelle Steuerelement (19) und / oder den Aktuator des Servoantriebs versehen ist.

2. Heizkörper (100) nach Anspruch 1, **gekennzeichnet dadurch, dass** die radiale Aussparung (10) im zylindrischen Kegel (11) mit einer zentralen Trennwand (20) versehen ist.

3. Heizkörper (100) nach Ansprüchen 1 und 2, **gekennzeichnet dadurch, dass** gegenüber der zentralen Trennwand (20) in der ersten Anschlussbuchse mit Gewinde (6) eine Trennwand (21) ausgebildet ist.

4. Heizkörper (100) nach Ansprüchen 1, 2 und 3, **gekennzeichnet dadurch, dass** der Satz der Ventilspindel (9) aus einem Satz von zylindrischem Kegel (11) und Verschlussstopfen mit Gewinde (22) besteht, ausgebildet abgedichtet in der zweiten Anschlussbuchse mit Gewinde (8),

5. Heizkörper (100) nach Anspruch 4, **gekennzeichnet dadurch, dass**, dass der unter dem Verschlussstopfen mit Gewinde (22) ausgebildete zylindrische Kegel (11) aus einem Hohlzylinder (23) besteht, der im Sattel (12) in allen Richtungen undurchlässig ist.

6. Heizkörper (100) nach Anspruch 1, **gekennzeichnet dadurch, dass** das Verbindungselement (1) in Verbindung mit den zwei Heizkörperplatten (2,3) des Heizkörpers (100) ausgebildet ist, an Stelle des Ablaufs des Heizmediums aus ihnen über die erste Anschlussbuchse mit Gewinde (6).

7. Heizkörper (100) nach Anspruch 1, **gekennzeichnet dadurch, dass** das Verbindungselement (1) in Verbindung mit den zwei Heizkörperplatten (2,3) des Heizkörpers (100) ausgebildet ist, an Stelle des Ablaufs des Heizmediums aus ihnen als Teil einer Rohrventilgarnitur (25) für den unteren Anschluss des Heizkörpers (100) an das Heizsystem.

8. Heizkörper (100) nach Anspruch 1, **gekennzeichnet dadurch, dass** das Verbindungselement (1) in Verbindung mit zwei Heizkörperplatten (2,3) des Heizkörpers (100) ausgebildet ist, an Stelle des Ablaufs des Heizmediums aus ihnen als Teil einer Rohrventilgamitur (25) für den unteren mittigen Anschluss des Heizkörpers (100) an das Heizsystem.

9. Heizkörper (100) nach allen Ansprüchen, **gekennzeichnet dadurch, dass** seine Anordnung Dichtungsteile wie O-Ringe (26) und/oder Flachdichtungen (27) umfasst,

## Revendications

1. Radiateur (100) de chauffage d'un système de chauffage composé de deux plaques (2,3) chauffantes et d'un élément (1) de liaison pour relier deux plaques (2,3) chauffantes, l'élément (1) de liaison étant composée de manchons (4,5) de raccordement latéraux et d'un premier manchon (6) de raccordement fileté, montés autour de la partie (7) sphérique centrale de l'élément (1) de liaison dans une pièce en T, un deuxième manchon (8) fileté pour l'ensemble d'une tige (9) de soupape est raccordé transversalement au plan des intersections des axes principaux des manchons de raccordement et du premier manchon (6) de raccordement fileté et ladite tige (9) de soupape s'engage de manière étanche dans la partie (7) sphérique centrale de l'élément (1) de liaison au moyen de son cône (11) cylindrique pourvu d'un évidement (10) radial, pour lequel un siège (12) est formé dans la partie (7) sphérique centrale et muni d'orifices débouchant dans les manchons (4,5) de raccordement latéraux et le manchon (6) de raccordement fileté **caractérisé en ce que** l'ensemble de la tige (9) de soupape comprend un manchon (16) coaxial pour guider et étancher le fut (17) de la tige (9) de soupape, l'extrémité libre du fût (17) étant pourvue d'un épaulement (18) d'entraînement pour un élément (19) de commande manuelle et/ou un élément d'actionnement de servomoteur.

2. Radiateur (100) selon la revendication 1 **caractérisé en ce que** l'évidement (10) radial dans le cône (11) cylindrique est pourvu d'une cloison (20) centrale.

3. Radiateur (100) selon les revendications 1 et 2 **caractérisé en ce qu'**une cloison de séparation (21) est disposée dans le premier manchon (6) de raccordement fileté en face de la cloison (20) centrale.

4. Radiateur (100) selon les revendications 1, 2 et 3 **caractérisé en ce que** l'ensemble de la tige (9) de soupape est composé d'un ensemble de cône (11) cylindrique et de bouchon (22) de fermeture fileté, disposés dans le deuxième manchon (8) fileté.

5. Radiateur (100) selon la revendication 4 **caractérisé en ce que** le cône (11) cylindrique disposé sous le bouchon (22) de fermeture fileté est constitué d'un cylindre (23) creux imperméable au niveau du siège (12) dans toutes les directions,

6. Radiateur (100) selon la revendication 1 **caractérisé en ce que** l'élément (1) de liaison est disposé en liaison avec deux plaques (2, 3) chauffantes du radiateur (100) au point de sortie du fluide chauffant de celles-ci via le premier manchon (6) de raccordement fileté.

7. Radiateur (100) selon la revendication 1 **caractérisé en ce que** l'élément (1) de liaison est disposée en liaison avec deux plaques (2, 3) chauffantes du radiateur (100) au point de sortie du fluide chauffant de celles-ci faisant partie d'un ensemble (25) de soupape tubulaire pour le raccordement inférieur du radiateur (100) au système de chauffage.

8. Radiateur (100) selon la revendication 1 **caractérisé en ce que** l'élément (1) de liaison est disposée en liaison avec deux plaques (2, 3) chauffantes du radiateur (100) au point de sortie du fluide chauffant de celles-ci faisant partie d'un ensemble (25) de soupape tubulaire pour le raccordement inférieur médian du radiateur (100) au système de chauffage.

9. Radiateur (100) selon toutes les revendications précédentes **caractérisé en ce que** son assemblage comprend des pièces d'étanchéité telles que des joints (26) toriques et/ou des joints (27) plats.
